(19) Europäisches Patentamt
European Patent Office
Office européen des brevets

(11) EP 1 742 041 B1

## (12) EUROPÄISCHE PATENTSCHRIFT

(45) Veröffentlichungstag und Bekanntmachung des Hinweises auf die Patenterteilung:
**23.10.2013 Patentblatt 2013/43**

(51) Int Cl.:
**G01N 21/89** *(2006.01)* **G01B 11/24** *(2006.01)*
**B07C 5/342** *(2006.01)*

(21) Anmeldenummer: **06013670.2**

(22) Anmeldetag: **30.06.2006**

(54) **Kostengünstige multi-sensorielle Oberflächeninspektion**

Cost-effective multi-sensorial surface inspection

Inspection de surface multi sensorielle économique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.07.2005 DE 102005031490**

(43) Veröffentlichungstag der Anmeldung:
**10.01.2007 Patentblatt 2007/02**

(73) Patentinhaber: **Baumer Inspection GmbH**
**78467 Konstanz (DE)**

(72) Erfinder: **Eberhardt, Jörg Dr.**
**88074 Sibratshaus (DE)**

(74) Vertreter: **Strauss, Steffen et al**
**Baumer Innotec AG**
**Hummelstrasse 17**
**8500 Frauenfeld (CH)**

(56) Entgegenhaltungen:
**EP-A- 1 030 173      DE-A1- 10 063 293**
**DE-C1- 19 609 045**

• **R. MASSEN: "Multisensorial cameras in industrial quality inspection" AT'95: ADVANCED TECHNOLOGIES INTELLIGENT VISION (CAT. NO.95TH8124), 1995, Seiten 23-26, XP002399082**

**Beschreibung**

Die automatische Inspektion von Oberflächen in der Produktionslinie zur Erkennung von ästhetischen und physikalischen Qualitätsmängeln ist heute eine eingeführte Technologie für flache Produkte wie textile Bahnen, keramische Fliesen und Bodenbeläge (siehe z.B. www.massen.com; www. isravision.com). Die Bildaufnahme geschieht bei diesen Systemen in der Regel mit Hilfe von Zeilenkameras und unterschiedlichen Beleuchtungseinrichtungen, welche die Produktoberfläche entweder diffus oder aber gerichtet oder aber (bei transparenten Produkten) im Durchlicht beleuchten.

Oft werden mehrere unterschiedliche Beleuchtungs-/Kamerasysteme in einer Anlage kombiniert, um die unterschiedlichen Fehler optimal erkennen zu können.

Verschmutzungen, Verfärbungen, u. Ä. werden in der Regel unter einer diffusen Beleuchtung mit Farb- oder s/w Kameras erkannt. Oberflächenbeschädigungen wie Kratzer, Beulen und Eindrücke hingegen werden besser unter einer gerichteten Beleuchtung mit s/w Kameras im sog. Dunkelfeld oder Hellfeld detektiert. Die Kombination mehrerer Zeilenkameras mit einer zugeordneten, speziellen Beleuchtung nennt man "multi- sensorielle" Inspektionssysteme.

Es gibt aber zahlreiche Produkte mit einer nicht-flachen, insbesondere in der Höhe strukturierten Vorderseite wie z.B. Möbelfronten, Garagentore, Essgeschirr, usw. Bei diesen Produkten gibt es Teilregionen mit unterschiedlicher Höhe (bezogen auf die Rückfläche), mit im Raum geneigten Teilflächen, Fasen und Übergängen, oder mit eingepressten Rillen, die zu einer komplexen, dreidimensionalen Topologie führen. Wir bezeichnen diese Oberflächen im Rahmen dieser Anmeldung als "strukturierte Oberflächen" im Vergleich zu den flachen Oberflächen.

Jede dieser Teilregionen benötigt je nach Neigung und Fehlertyp eine andere Beleuchtungs-/Kamera-Anordnung zur Erkennung von Oberflächenfehlern in dieser Teilregion. Dies führt bei bekannten multisensoriellen Systemen zu einer sehr großen Vielfalt von Beleuchtungs-/Kamera-Anordnungen und damit zu sehr hohen Kosten. Darüber hinaus sind die einmal eingestellten Beleuchtungswinkel/ Aufnahmewinkel nur für eine bestimmte Oberflächenstruktur gültig und müssen bei einem andersartig strukturierten Produkt umständlich neu eingerichtet werden. Diese Schwierigkeiten haben bisher dazu geführt, dass die Inspektion von Produkten mit strukturierter Topologie nicht zufriedenstellend gelöst ist.

Es sind technische Lösungen für die Oberflächeninspektion bekannt, die mit einer in der Regel aus einer senkrechten Position aufnehmenden Farbzeilenkamera arbeiten. Unter verschiedenen Winkeln angeordnete, spektral unterschiedlich eingestellte Beleuchtungen belichten dabei die Oberfläche. Auf Grund der drei Farbkanäle der Farbzeilenkamera werden somit gleichzeitig mehrere (i.A. drei) Bilder des gleichen Punktes der Oberfläche aufgenommen. Durch Verrechnung der einzelnen, gleichzeitig entstehenden Bilder können Defekte auch dann noch erkannt werden, wenn sie sich auf unterschiedlicher Höhe oder Neigung der Oberflächen-Topologie befinden (sog. fotometrisches Stereo, siehe z.B. EP 0 898 163 B1, Fraunhofer Gesellschaft).

Diese Lösung ist jedoch durch die Verwendung einer mehrkanaligen Farbzeilenkamera und insbesondere bei großen Produkten durch die hohe geforderte Querauflösung (Anzahl von Bildpunkten pro Zeile) der Farbzeilenkamera sehr teuer. Das Verfahren des fotometrischen Stereos nach EP 0 898 163 erfordert auch die komplizierte Berechnung von jeweils neuen, aus mehreren individuellen Bildern berechneten Bildern, was insbesondere bei der Beobachtung schneller Produkte eine sehr hohe Rechenleistung voraussetzt. Das Verfahren geht ferner davon aus, dass die beobachtende Farbzeilenkamera nicht weiß, welche lokale Produkttopologie sich im Moment der Aufnahme einer Bildzeile im Bildfeld befindet. Die Beleuchtungsanordnungen und Verrechnungen der einzelnen Bilder richtet sich daher nur nach globalen topologischen Merkmalen des zu inspizierenden Produktes wie die mittlere Prägung, der mittlere Glanzgrad usw.

Aus der DE-A 100 63 293 ist ein Verfahren und eine Vorrichtung zur mehrmaligen Inspektion von Oberflächen im Durchlauf bekannt, das bzw. die mindestens zwei verschiedene Lichtquellen umfaßt, die in gepulster Art betrieben werden, um unterschiedliche Modalitäten der untersuchten Oberfläche zu messen, sowie eine Zeilenkamera und eine Steuerungseinheit, die die Lichtquellen synchron zum Aufnahmetakt der Kamera abwechselnd schaltet. So können mindestens zwei verschiedene Bilder aufgenommen werden, die paßgenau aufeinander bezogen sind. Die mindestens zwei Lichtquellen können beispielsweise so ausgestaltet bzw. angeordnet sein, daß mittels der ersten Lichtquelle eine Farbinformation über die untersuchte Oberfläche und mittels der zweiten Lichtquelle eine Information über die dreidimensionale Beschaffenheit der untersuchten Oberfläche gewonnen werden kann.

Aus der EP-A-1 030 173 ist ein Verfahren bzw. eine Vorrichtung zur Inspektion von Oberflächen bewegter Produkte bekannt, bei dem bzw. bei der ein Bereich der zu inspizierenden Oberfläche unter zwei verschiedenen Winkeln beleuchtet wird und dieser Bereich von einer Zeilenkamera erfaßt wird. Die Lichtquellen werden so gepulst betrieben, daß sie synchron mit dem Zeilentakt der Zeilenkamera sind. Die Pulsfrequenz der Lichtquellen beträgt mindestens 1 kHz.

Aus der DE-C-196 09 045 ist ein Verfahren und eine Vorrichtung zur optischen Prüfung eines Holzprüflings bekannt, bei dem bzw. bei der der Prüfling mit drei unterschiedlichen Beleuchtungsvorrichtungen an einer Prüfstelle beleuchtet wird. Jede Beleuchtungsvorrichtung sendet Licht unterschiedlicher, sich nicht überlappender Wellenlänge aus. Die Lichtsignale werden mit einer mehrkanaligen Zeilenkamera gleichzeitig aufgenommen, wobei die den einzelnen Beleuchtungsvorrichtungen zugeordneten Lichtsignale jeweils gesonderten, unterschiedliche Merkmale der Prüfstelle erfassenden Zeilensensoren der Kamera zugeleitet werden. Die Bildsignale aller Zeilensensoren werden in einem Bildrechner zu einem einzigen Bild zusammengefaßt.

Es besteht daher ein hohes wirtschaftliches Interesse an einer einfachen und kostengünstigen Oberflächeninspektion für strukturierte Oberflächen wie Möbelfronten, Türen usw. mit Hilfe einfacher und kostengünstiger Zellenkamerasysteme.

Es besteht der Bedarf, unabhängig von den lokalen radiometrischen und geometrischen Eigenschaften der zu prüfenden Oberfläche, wie z.B. der lokalen Neigung, der lokalen Krümmung, der lokalen Höhe, der lokalen Reflexionseigenschaften, usw., robust alle ästhetischen und physikalischen Oberflächenfehler in allen Bereichen dieser strukturierten Oberflächen zu erkennen.

Dies wird erreicht durch ein Verfahren gemäß Anspruch 1 und durch eine Anordnung gemäß Anspruch 8.

Es wird ein Verfahren zur Oberflächeninspektion bewegter Produkte zur Verfügung gestellt, das die zu prüfende bewegte Oberfläche mit mindestens einer quer zur Bewegung der Oberfläche angeordneten stationären Zeilenkamera bildhaft erfasst. Unter "Zeilenkamera" werden im Sinne der Erfindung auch Matrixkameras verstanden, bei denen lediglich wiederholt immer wieder die gleiche Zeile ausgelesen wird. Die Zeilenkamera hat einen Zeilentakt, der mindestens N-fach höher ist, als es die geometrische Größe der zu detektierenden Defekte verlangt. Eine jeweils andere Beleuchtungskonfiguration aus einer Anzahl von N Beleuchtungskonfigurationen belichtet die zu prüfende Oberfläche stroboskopisch, synchronisiert mit dem Zeilentakt, wobei von N aufeinander folgenden Bildzeilen der Zeilenkamera jede jeweils mit einer anderen Beleuchtungskonfiguration aus den N Beleuchtungskonfigurationen belichtet wird. Eine Beleuchtungskonfiguration wird gebildet durch selektives Aktivieren oder Deaktivieren einzelner oder mehrerer Lichtquellen aus einer Anzahl von M Lichtquellen. Die entstehende mindestens N-fach verschachtelte multisensorielle Bildzeile der zu prüfenden Oberfläche .wird in mindestens N einzelne Bildzeilen aufgespalten. Die einzelnen Zeilenbilder werden zur Erkennung von Defekten auf der Oberfläche mit Verfahren der automatischen Bildverarbeitung ausgewertet.

Durch die Erhöhung des Zeilentaktes um das N-fache über die für die gewünschte Auflösung benötigte Taktrate hinaus, wird es möglich, ineinander verschachtelte multisensorielle Bildzeilen zu erzielen. Außerdem werden mehrere und zwar mindestens N Beleuchtungskonfigurationen nacheinander stroboskopisch angeschaltet, synchronisiert mit dem erhöhten Zeilentakt. Damit sind die ineinander verschachtelten multisensoriellen Bildzeilen jeweils unter anderen Beleuchtungsbedingungen aufgenommen, ohne dass die Kamera getrennte Farbkanäle benötigt. In einer bevorzugten Ausführungsform wird eine einfache monochromatische und damit kostengünstige Zellenkamera verwendet und dennoch eine "multi-sensorielle Inspektion'" erreicht.

Die N Belauchtungskonfigurationen beleuchten die zu prüfende Oberfläche mit jeweils unterschiedlicher optischer Charakteristik. Bevorzugter Weise ist die Anzahl M der Lichtquellen kleiner als die Anzahl N der Beleuchtungskonfigurationen. Damit können N Beleuchtungskonfigurationen aus nur M Lichtquellen gebildet werden, was weiter zur Kostenreduzierung beiträgt. Vorzugsweise sind die Lichtquellen aus Halbleiter-Lichtquellen gebildet. Es wird somit eine kostengünstige Beleuchtung geschaffen, die die Detektion unterschiedlicher Fehler erlaubt.

Die Auswertung der N einzelnen Zeilenbilder wird automatisch je nach Oberflächenregion unterschiedlich gewichtet, wobei das aus Produktionsdaten vorliegende Wissen über lokale Topologie und lokale optische Eigenschaften der Produktoberfläche genutzt wird. Es ist damit möglich, das z.B. in der CAD Konstruktion enthaltene Wissen zu nutzen, um die optische Inspektion trotz räumlich komplizierter Oberflächen mit einfachen Mitteln durchzuführen. Das bei solchen Produkten vorhandene Vorwissen über die Geometrie der zu inspizierenden Oberfläche kann somit gezielt dazu benutzt werden, aus den N-fach aufgenommenen Bildzeilen nur diejenigen Bildzeilen auszuwerten, welche von einer Beleuchtungsart stammen, die Fehler sichtbar macht, welche sich auf dem momentan im Bildfeld der Zeilenkamera befindlichen Oberflächenprofil befinden, d.h. denjenigen Beleuchtungskanal bei der Auswertung zu bevorzugen, welcher diese Region im Sinne der Fehlererkennung am günstigsten ausleuchtet. Wahlweise können die übrigen Bildzeilen überhaupt nicht ausgewertet werden. Solche Verfahren der unterschiedlichen Gewichtung von Signalen bei der Betrachtung mehrerer Signale (sog. "sensor fusion") sind dem Fachmann der Mustererkennung bekannt und brauchen daher nicht weiter beschrieben zu werden.

Durch eine solche regional adaptive Gewichtung lassen sich z.B. Fehldetektionen durch zu niedrige Ansprechschwellen wirksam verringern und damit die in der Oberflächeninspektion gefürchtete Abwägung zwischen hoher Detektionsempfindlichkeit und der Gefahr von fehlerhaften Überdetektionen wesentlich erleichtern. Dies bedeutet insbesondere für den Bediener einer solchen Anlage eine erhebliche Erleichterung bei der Einstellung der Detektionsschwellen.

Die Erfindung stellt ferner eine Anordnung zur Verfügung, die die Oberflächeninspektion bewegter Produkte erlaubt. Sie umfasst mindestens eine quer zur Bewegung der Oberfläche angeordnete Zeilenkamera mit einem Zeilentakt, der mindestens N-fach höher ist, als es die geometrische Größe der zu detektierenden Defekte verlangt. Eine Anzahl von M Lichtquellen können die zu prüfende Oberfläche mit jeweils unterschiedlicher optischer Charakteristik belichten. Die Anordnung umfasst ferner eine Schaltvorrichtung, die synchronisiert mit dem Zeilentakt eine jeweils andere Beleuchtungskonfiguration aus N Beleuchtungskonfigurationen durch selektives Aktivieren oder Deaktivieren einer oder mehrerer der M Lichtquellen anschaltet. Durch diese Synchronisation werden aufeinanderfolgende Bildzeilen jeweils unter anderen Belichtungsbedingungen aufgenommen und es entstehen ineinander verschachtelte Bilder. Die Anordnung umfasst ferner eine Vorrichtung zum Aufspalten des entstehenden mindestens N-fach verschachtelten Bildes der zu prüfenden Oberfläche in mindestens N einzelne Bilder sowie eine Vorrichtung zur Auswertung der Einzelbilder zur Erkennung von Defekten auf der Oberfläche mit Verfahren der automatischen Bildverarbeitung.

Die Vorrichtung verwendet Daten über die Topologie und die lokalen optischen Eigenschaften der Produktoberfläche zur Auswertung der Einzelbilder und gewichtet bei der lokalen Bildauswertung der N einzelnen Bilder jeweils dasjenige Bild am lokal stärksten, welches unter der im Sinne der Fehlererkennung am günstigsten liegenden Beleuchtungskonfiguration belichtet wurde.

Der Erfindungsgedanke sei beispielhaft anhand der Inspektion von dreidimensionalen Möbelfronten (Küchentüren etc.) erklärt, wobei beispielhaft vier verschiedene stroboskopische Lichtquellen in fünf verschiedenen Kombinationen, d.h. in fünf verschiedenen Beleuchtungskonfigurationen eingesetzt werden. Hierzu werden folgende Abbildungen verwendet:

Fig. 1 zeigt schematisch die von einer Zeilenkamera erfassten Bereiche bei einer Oberflächeninspektion nach dem Stand der Technik;

Fig. 2 zeigt eine schematische Seitenansicht einer erfindungsgemäßen Anordnung mit einer Möbelfront, deren Oberfläche zu prüfen ist;

Fig. 3 zeigt wie nacheinander und synchronisiert mit dem Takt der Zeilenkamera die einzelnen Lichtquellen angeschaltet werden;

Fig. 4 zeigt schematisch die von einer Zeilenkamera erfassten Bereiche bei einer Oberflächeninspektion nach dem erfindungsgemäßen Verfahren.

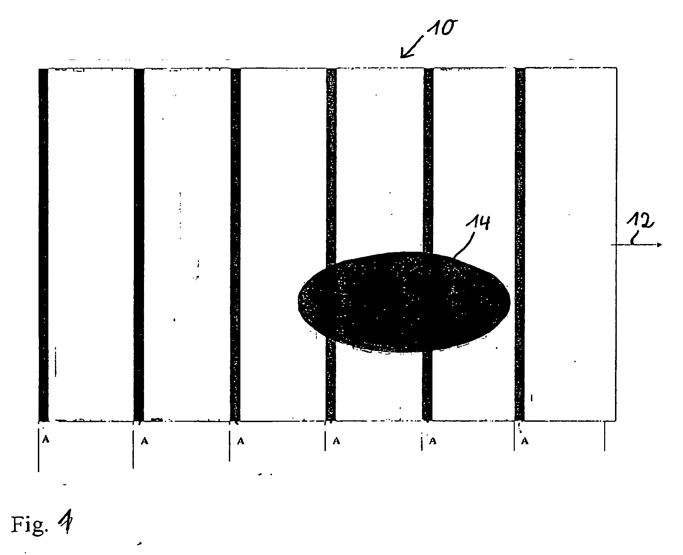

Fig. 1 zeigt schematisch die Oberfläche 10 eines Prüflings, der sich im Bild nach rechts bewegt, wie durch einen Pfeil 12 angedeutet ist. Auf der Oberfläche befindet sich ein Fehler oder Defekt 14. In aus dem Stand der Technik bekannten Verfahren, wird die Oberfläche mit einer Zeilenkamera inspiziert, während die Oberfläche entsprechend der zu detektierenden Fehler beleuchtet wird. Die Frequenz oder Taktrate, mit der die Zeilenkamera ausgelöst wird, berechnet sich aus der Transportgeschwindigkeit des zu prüfenden Produkts und des kleinsten zu erkennenden Fehlers. Die mit der Zeilenkamera gewonnenen Bildausschnitte sind durch die Balken A angedeutet, wobei die schematische Darstellung in Fig. 1 keine Aussage über die Breite des von der Kamera tatsächlich erfassten Bereichs erlaubt. Beispielhaft sei der kleinste zu erkennende Defekt a = 2 mm und die Produktgeschwindigkeit sei v = 30 m/min = 500 mm/sec. Die gewünschte Auflösung in Längs- und in Querrichtung sei jeweils 1mm. Hieraus ergibt sich für eine übliche Anordnung mit einer Zeilenkamera und einer Beleuchtung:

$$Zeilenfrequenz = 500mm/sec \: / \: 1 \: mm = 500 \: Hz,$$

d.h. jeweils wenn sich das Produkt um einen Millimeter bewegt hat, wird eine neue Aufnahme gemacht. Die Balken A in Fig. 1 haben im Beispiel also einen Abstand von 1 mm voneinander. Der etwa 2 mm große Defekt 14 wird sicher mit zwei Bildpunkten erfasst.

Die Produktbreite sei 1000 mm. Bei einer gewünschten Auflösung von 1mm ergibt sich dann die Anzahl der Bildpunkte pro Zeile = 1000 mm/ 1mm = 1000 Bildpunkte pro Zeile.

Es ist dem Fachmann der Bildverarbeitung bekannt, dass Oberflächenfehler je nach ihrer Art nur dann gut erkannt werden können, wenn sie aus der korrekten Richtung beleuchtet und mit der Kamera aufgenommen werden. Für eine dunkle Verschmutzung ist die bevorzugte Beleuchtung eine diffuse Beleuchtung; für Oberflächenfehler wie Kratzer, Beulen, Stellen mit verändertem Glanz hingegen benötigt man eine gerichtete Beleuchtung. Beide Beleuchtungsarten schließen sich in der Regel gegenseitig aus, d.h. können nicht gleichzeitig aktiv sein.

Traditionell wird dieses Problem bei Inspektionssystemen in der Produktionslinie dadurch gelöst, dass mehrere Beleuchtungs-/Kamera-Module in Bewegungsrichtung aufeinanderfolgend über der zu inspizierenden Oberfläche angeordnet werden. Dies ist naturgemäß eine sehr kostentreibende Lösung.

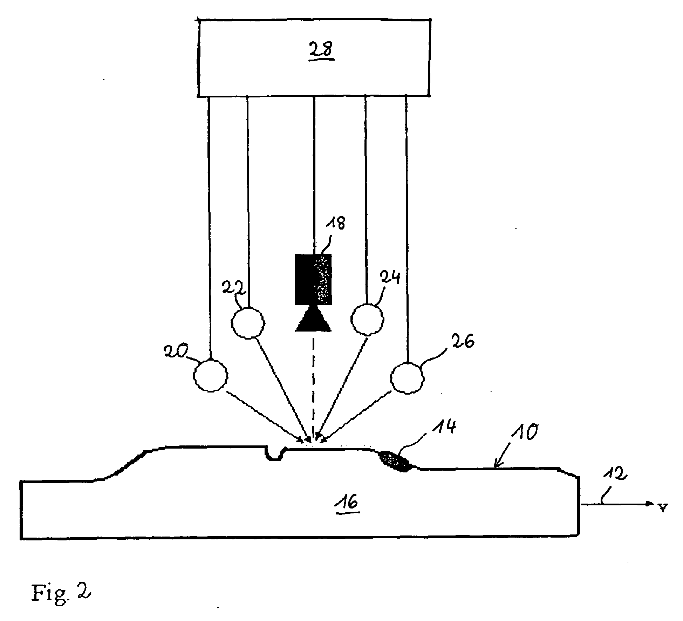

Fig. 2 zeigt eine erfindungsgemäße Anordnung zur Oberflächeninspektion. Eine Möbelfront 16 besitzt das in Fig. 2 gezeigte Höhenprofil: flache Regionen in unterschiedlicher Höhe wechseln sich mit Übergängen und Fasen unterschiedlicher Steigungen und mit eingelassenen rinnenförmigen Vertiefungen ab. Die Möbelfront 16 bewegt sich quer zu einer Zeilenkamera 18 mit einer Geschwindigkeit v im Bild von links nach rechts wie durch Pfeil 12 angedeutet. Für die Beleuchtung der Produktoberfläche 10 sind insgesamt 4 stroboskopische Lichtquellen 20 bis 26 um die senkrecht zur Möbelfront ausgerichteten Zeilenkamera 18 angeordnet. Ein Defekt 14, beispielhaft eine lokale Verschmutzung, befindet sich auf einer nach rechts abfallenden Flanke in der strukturierten Oberfläche 10. Die die Beleuchtungskonfigurationen bildenden Lichtquellen 20 bis 26 und die Zeilenkamera 18 sind mit einer Steuer- und Auswerteeinheit 28 verbunden. Diese Steuer- und Auswerteeinheit 28 kann aus mehreren einzelnen Vorrichtungen bestehen. Sie umfasst eine Schaltvorrichtung, die synchronisiert mit dem Zeilentakt der Zeilenkamera 18 eine jeweils andere Beleuchtungskonfiguration, bestehend aus einer der Lichtquellen 20 bis 26 oder aus einer Gruppe der Lichtquellen 20 bis 26, anschaltet. Sie umfasst ferner eine Vorrichtung zum Aufspalten des erfindungsgemäß entstehenden mindestens N-fach verschachtelten Bildes der zu prüfenden Oberfläche in mindestens N einzelne Bilder und eine Vorrichtung zur Auswertung der Einzelbilder zur Erkennung von Defekten auf der Oberfläche mit Verfahren der automatischen Bildverarbeitung.

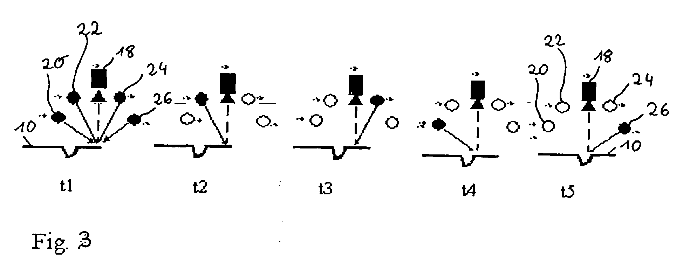

Im dargestellten Ausführungsbeispiel wird die zu inspizierende Oberfläche mit einer Gruppe von stroboskopisch einschaltbaren Lichtquellen beleuchtet, wobei nach Fig. 3 beispielhaft mit den vorgesehenen 4 Lichtquellen fünf verschiedene Beleuchtungskonfigurationen synchron zum Zeilentakt der bildgebenden Zeilenkamera 18, bei der es sich bevorzugter Weise um einen s/w Zeilensensors handelt, schnell hintereinander ausgelöst werden. Fig. 3 zeigt in vereinfachter Darstellung die Anordnung von Fig. 2 zu fünf aufeinanderfolgenden Zeitpunkten t1 - t5, wobei jeder der Zeitpunkte t1 - t5 dem Zeitpunkt einer Aufnahme der Zeilenkamera entspricht. Dunkel dargestellte Lichtquellen sind in der Fig. 3 angeschaltete Lichtquellen. Dabei sind in der dargestellten Ausführungsform:

Zeitpunkt t1, Beleuchtungskonfiguration A: eine momentan diffuse Beleuchtung durch das stroboskopische Einschalten für die Dauer eines Zeilentaktes gleichzeitig aller vier Lichtquellen 20 bis 26. Hierdurch werden lokale Verschmutzungen, Helligkeitsunterschiede u.ä. Oberflächendefekte für den senkrecht beobachtenden Zeilensensor 18 sichtbar.

Zeitpunkt t2, Beleuchtungskonfiguration B: eine momentan gerichtete Beleuchtung von links schräg durch das stroboskopische Einschalten für die Dauer eines Zeilentaktes lediglich der Lichtquelle 22. Hierdurch werden Oberflächendefekte wie Kratzer, Blasen usw. speziell auf den nach links abfallenden Regionen des Profils für die Zeilenkamera 18 sichtbar.

Zeitpunkt t3, Beleuchtungskonfiguration C: eine momentan gerichtete Beleuchtung von rechts schräg durch das stroboskopische Einschalten für die Dauer eines Zeilentaktes lediglich der Lichtquelle 24. Hierdurch werden Oberflächendefekte wie Kratzer, Blasen usw. speziell auf den nach rechts abfallenden Regionen des Profils für den Zeilensensor 18 sichtbar.

Zeitpunkt t4, Beleuchtungskonfiguration D: eine momentan gerichtete Beleuchtung unter einem großen Winkel zur Oberflächennormalen flach von links durch das stroboskopische Einschalten für die Dauer eines Zeilentaktes lediglich der Lichtquelle 20. Hierdurch werden Oberflächendefekte wie Kratzer, Blasen usw. speziell auf den ebenen Regionen des Profils für die Zeilenkamera sichtbar, weil sie einen Schatten nach rechts erzeugen.

Zeitpunkt t5, Beleuchtungskonfiguration E: eine momentan gerichtete Beleuchtung unter einem großen Winkel zur Oberflächennormalen flach von rechts durch das stroboskopische Einschalten für die Dauer eines Zeilentaktes lediglich der Leuchte 26. Hierdurch werden Oberflächendefekte wie Kratzer, Blasen usw. speziell auf den ebenen Regionen des Profils für den Zeilensensor 18 sichtbar, weil sie einen Schatten nach links erzeugen.

Jede dieser Beleuchtungen erzeugt damit für sich allein eine besonders hohe Sichtbarkeit für eine bestimmte Gattung von Fehlern. Einige der Beleuchtungskonfigurationen bzw. Beleuchtungsarten wie z.B. D und E erzeugen durch Kombination beider Bilder gut sichtbare Fehler auf den ebenen Regionen der Profile dadurch, dass der durch eine lokale Fehlstelle erzeugte Schattenwurf nach rechts (Szenario D) kombiniert mit dem durch eine lokale Fehlstelle erzeugten Schattenwurf nach links (Szenario E) ein Bild erzeugt, bei welchen die Fehler durch einen beidseitigen Schattenwurf deutlich sichtbar werden.

Der Wechsel der N Beleuchtungsarten, bzw. Beleuchtungskonfigurationen erfolgt synchron mit der Zeilenfrequenz und jede stroboskopische Beleuchtungskonfiguration belichtet die Oberfläche so kurz, dass nur die eine aktuell ausgelesene Bildzeile des Zeilensensor belichtet wird. Die Zeilenfrequenz des Zeilensensors wird dabei so hoch gewählt, dass die Bewegung des Profils vernachlässigbar klein ist, d.h. dass jede Beleuchtungskonfiguration sehr eng benachbarte Bildzeilen der bewegten Oberfläche erfassen.

Um die gleiche geometrische Auflösung mit dem erfindungsgemäßen Verfahren zu erhalten, muss die Zeilenfrequenz verglichen mit dem Stand der Technik erhöht werden. Bei 5 Beleuchtungskonfigurationen ist der Zeilentakt mindestens zu verfünffachen. Für die im Zusammenhang mit Fig. 1 betrachtete gewünschte Auflösung von 1 mm ergibt sich

$$\text{Zeilenfrequenz} = 500 \text{ Hz x } 5 = 2500 \text{ Hz.}$$

Verallgemeinert heißt das bei der Verwendung von N Beleuchtungskonfigurationen eine Vervielfachung der Zeilenfrequenz um N. Die Anzahl von Bildpunkten pro Zeile bleibt von dem erfindungsgemäßen Verfahren unberührt.

Zeilenkameras mit hoher Zeilenfrequenz bis zu 50 KHz sind heute Stand der Technik und günstig zu erhalten. Der Preis zur Gewinnung eines Oberflächenbildes mit der 5fachen Informationsmenge durch die Verwendung von 5 an die Topologie der Möbelfront und an die Gruppe der zu detektierenden Fehler angepassten Beleuchtungsanordnungen ist daher bescheiden. Insbesondere werden im Vergleich zum Stand der Technik keine fünf kombinierte Beleuchtungs-/ Kamera-Module mit jeweils 5 Beleuchtungen und 5 Kameras mehr benötigt.

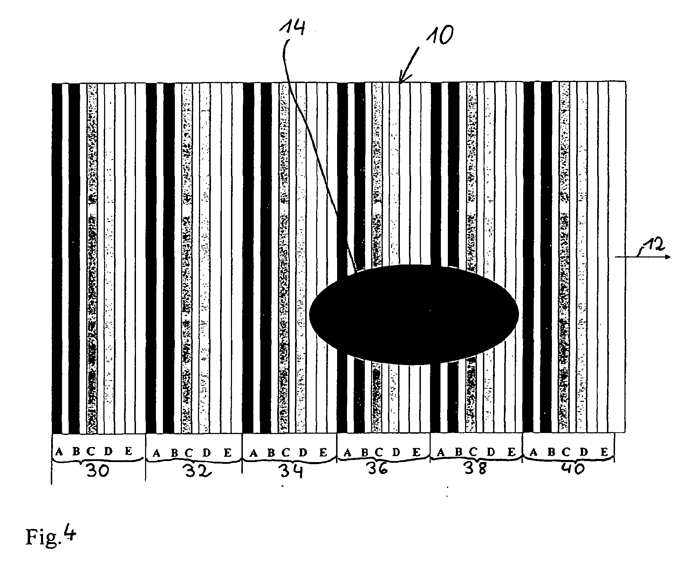

Die Zeilenkamera 18 liefert seine Bildzeilen über eine Digitalisierungseinheit an einen Bildspeicher in der Steuer- und Auswerteeinheit 28. Fig. 4 zeigt schematisch das im Bildspeicher entstehende 5-fach verschachtelte Zeilenbild der Produktoberfläche. Wie Fig. 1 zeigt Fig. 4 die zu prüfende Oberfläche 10, die sich in Richtung des Pfeils 12 bewegt. Auf der Oberfläche ist ein Defekt 14 angedeutet. Da die Zeilenkamera mit einer 5fach höheren Zeilenfrequenz betrieben wird, folgen die Aufnahmebalken A - E in dichterer Folge aufeinander, bei den bereits verwendeten Beispielswerten bleibend, wird jetzt eine neue Aufnahme ausgelöst, wenn sich das Produkt erst um 0,2 mm bewegt hat. Aufgrund der mit der Zeilenfrequenz wechselnden Beleuchtung, wechseln sich jeweils die 5 verschiedenen - jeder Beleuchtungskonfiguration A bis E zugeordneten - Zeilenbilder ab. Wir bezeichnen eine solche Folge von Anordnungen als ein N-stufiges Beleuchtungsszenario, im vorliegenden Beispiel demnach als 5-stufiges Beleuchtungsszenario. Jeweils N=5 aufeinanderfolgende Bildzeilen bilden eine "multisensorielle Bildzeile", die in Fig. 4 mit den Bezugszeichen 30 bis 40 bezeichnet sind. Jede multisensorielle Bildzeile beschreibt (aufgrund der im Vergleich zur Vorschubgeschwindigkeit des Produktes sehr hoch gewählten Zeilenfrequenz bzw. des Zeilentaktes) im wesentlichen den gleichen Ort der Produktoberfläche, aber unter N=5 verschiedenen Beleuchtungskonfigurationen aufgenommen.

Das N-fach verschachtelte Zeilenbild wird in Form von N Einzelbildern im Bildrechner abgespeichert und diese N Bilder werden unabhängig voneinander auf Defekte hin ausgewertet. In einer bevorzugten Ausführungsform werden aus den im Bildspeicher abgelegten multisensoriellen (d.h. N-fach verschachtelten) Zeilenbildern jeweils M neue multisensorielle Zeilenbilder berechnet, indem alle oder eine Untermenge der N Zeilenbilder zu neuen Zeilenbildern kombiniert werden.

Eine solche Kombination kann beispielsweise die Subtraktion zweier aus zwei verschiedenen Beleuchtungskonfigurationen stammenden Zeilenbilder sein. Wird beispielsweise ein neues Zeilenbild F durch Subtraktion der Zeilenbilder E und D

$$F = E - D$$

erzeugt, so enthält dieses Bild nur noch die Bildstellen, welche zwischen den Beleuchtungskonfigurationen E und D unterschiedlich sind, beispielsweise nur noch die Oberflächendefekte. E und D bezeichnen die im oben genannten Beispiel eines 5-stufigen Beleuchtungsszenarios die eingeschalteten Beleuchtungen 20 und 26.

Bei der Auswertung werden die Bilder in der beschriebenen Ausführungsform je nach Beleuchtungsszenario und Oberflächenbeschaffenheit unterschiedlich gewichtet. Beispielhaft werden die Helligkeits-Defekte auf nach links geneigten Flanken in den Bildern mit einer von rechts kommenden Beleuchtung stärker gewichtet als in den übrigen, für diese Region weniger geeigneten Beleuchtungskonfigurationen. Die Gewichtung kann durch eine niedrige Detektionsschwelle erreicht werden, weil in dem Bild mit einer günstigen Beleuchtungskonfiguration die Defekte kontrastreicher erscheinen und damit einen besseren Signal/Rauschabstand aufzeigen, als in den ungünstig beleuchteten Bildern. Aus der CAD Beschreibung ist bekannt, an welchen Stellen der Möbelfront nach links geneigte Flächen liegen. Aus den Koordinaten der Bildpunkte der Zeilenkamera kann bestimmt werden, welcher Ausschnitt im erfassten 2-dimensionalen N-fach verschachtelten Bild dieser Region entspricht. In dieser Region wird daher bei der Auswertung dem Beleuchtungskanal "schräg von links" ein stärkeres Gewicht bei der Fehlerdetektierung zugeordnet als den übrigen Kanälen. Im Extremfall kann diese Gewichtung so weit gehen, dass nur noch das günstig beleuchtete Bild ausgewertet und die übrigen 4 Bilder in dieser Region nicht ausgewertet werden.

Die unterschiedliche Gewichtung der unterschiedlichen Beleuchtungskanäle kann nicht nur nach der Höhen- und Neigungswinkel-Topologie ausgerichtet werden, sondern auch nach andern lokalen, a-priori bekannten Oberflächenbeschaffenheiten wie Helligkeit, Textur, Glanz, usw. sowie nach der zulässigen lokalen Toleranz und der jeweiligen Defektklasse. Hierdurch wird beispielhaft erreicht, dass die in schräger Beleuchtung gut sichtbaren Abplatzer an den für das menschliche Auge gut sichtbaren Fasen mit einer sehr niedrigen Toleranzschwelle detektiert werden.

Wird die Gewichtung mit den Faktoren 1 und 0 durchgeführt, so werden nur noch Zeilenbilder ausgewertet, von denen man weiß, dass sie die momentan vom Zeilensensor erfasste Oberfläche topologisch günstig ausgeleuchtet erfasst hat. Hierdurch können die jeweils übrigen Zeilen einer N-fach Gruppe (einer multisensoriellen Zeile) ignoriert werden und damit die erforderliche Rechenleistung wesentlich verringert werden. Hierdurch werden im Vergleich zum fotometrischen Stereo sehr viel einfachere Bildverarbeitungslösungen erreicht.

Die beschriebene Anwendung der Inspektion einer strukturierten Möbelfront ist beispielhaft zu verstehen. Der Erfindungsgedanke richtet sich an alle Oberflächeninspektionsaufgaben, welche mit einer einzigen Beleuchtung nur ungünstig ausgeleuchtet werden können und bei welchen aus Kostengründen keine Mehrfach-Kombination von Beleuchtungs- und s/w Kamera-Modulen bzw. eine kostspielige Farbkamera nach der Lehre der EP 0 898 163 B1 eingesetzt werden können.

**Patentansprüche**

1. Verfahren zur Oberflächeninspektion bewegter Produkte mit wenigstens einer zu prüfenden Oberfläche (10), wobei das Verfahren folgende Verfahrensschritte umfasst:

   - mindestens eine quer zur Bewegung der Oberfläche (10) angeordnete Zeilenkamera (18) erfasst die zu prüfende Oberfläche (10) bildhaft mit einem Zeilentakt, wobei der Zeilentakt mindestens N-fach höher ist, als es die geometrische Größe der zu detektierenden Defekte (14) verlangt;
   - eine jeweils andere Beleuchtungskonfiguration aus einer Anzahl von N Beleuchtungskonfigurationen belichtet die zu prüfende Oberfläche (10) stroboskopisch, synchronisiert mit dem Zeilentakt; wobei von N aufeinander folgenden Bildzeilen der Zeilenkamera (18) jede jeweils mit einer anderen Beleuchtungskonfiguration aus den N Beleuchtungskonfigurationen belichtet wird und wobei eine Beleuchtungskonfiguration gebildet wird durch selektives Aktivieren oder Deaktivieren einzelner oder mehrerer Lichtquellen aus einer Anzahl von M Lichtquellen (20, 22, 24, 26);
   - eine entstehende mindestens N-fach verschachtelte multisensorielle Bildzeile (30, 32, 34, 36, 38, 40) der zu prüfenden Oberfläche (10) wird in mindestens N einzelne Bildzeilen (A bis E) aufgespalten;
   - N einzelnen Zeilenbilder werden zur Erkennung von Defekten (14) auf der Oberfläche (10) mit Verfahren der automatischen Bildverarbeitung ausgewertet, wobei die Auswertung der N einzelnen Zeilenbilder automatisch je nach Oberflächenregion unterschiedlich gewichtet wird, wobei das aus Produktionsdaten vorliegende Wissen über lokale Topologie und lokale optische Eigenschaften der Produktoberfläche genutzt wird und jeweils diejenige Bildzeile am lokal stärksten gewichtet wird, welches unter der im Sinne der Fehlererkennung am günstigsten liegenden Beleuchtungskonfiguration belichtet wurde.

2. Verfahren nach Anspruch 1, wobei die zu prüfende Oberfläche (10) in der Höhe und/oder Neigung und/oder Textur und/oder Farbe und/oder Helligkeit und/oder einer anderen optisch erkennbaren Eigenschaft lokal strukturiert ist.

3. Verfahren nach einem der vorangegangenen Ansprüche, wobei die Zeilenkamera (18) eine monochromatische Zeilenkamera ist.

4. Verfahren nach einem der vorangegangenen Ansprüche, wobei mit den N Beleuchtungskonfigurationen die zu prüfende Oberfläche (10) unter unterschiedlichen Winkeln, mit einer unterschiedlichen Abstrahlcharakteristik, mit spektral unterschiedlichem Licht und/oder mit unterschiedlicher Helligkeit belichtet wird.

5. Verfahren nach einem der vorangegangenen Ansprüche, wobei die Anzahl M der Lichtquellen (20, 22, 24, 26) kleiner ist als die Anzahl N der Beleuchtungskonfigurationen.

6. Verfahren nach einem der vorangegangenen Ansprüche, wobei die M Lichtquellen (20, 22, 24, 26) aus Halbleiter-Lichtquellen gebildet werden.

7. Verfahren nach einem der vorangegangenen Ansprüche, wobei sich nach der Aufnahme der mindestens N Bildzeilen der Vorgang wiederholt.

8. Anordnung zur Oberflächeninspektion bewegter Produkte mit wenigstens einer zu prüfenden Oberfläche (10) umfassend

   - mindestens eine quer zur Bewegung der Oberfläche (10) angeordnete Zeilenkamera (18) mit einem Zeilentakt, der mindestens N-fach höher ist, als es die geometrische Größe der zu detektierenden Defekte (14) verlangt;

- eine Anzahl von M Lichtquellen (20, 22, 24, 26)
- eine Schaltvorrichtung, die synchronisiert mit dem Zeilentakt eine jeweils andere Beleuchtungskonfiguration aus N Beleuchtungskonfigurationen, die die zu prüfende Oberfläche (10) mit jeweils unterschiedlicher optischer Charakteristik belichten können, durch selektives Aktivieren oder Deaktivieren einer oder mehrerer der M Lichtquellen (20, 22, 24, 26) anschaltet;
- eine Vorrichtung zum Aufspalten des entstehenden mindestens N-fach verschachtelten multisensoriellen Bildzeilen der zu prüfenden Oberfläche (10) in mindestens N einzelne Zeilenbilder;
- eine Vorrichtung zur Auswertung der N einzelnen Zeilenbilder zur Erkennung von Defekten auf der Oberfläche (10) mit Verfahren der automatischen Bildverarbeitung,

eingerichtet zum Durchführen des Verfahrens nach Anspruch 1,
wobei die Vorrichtung derart ausgelegt ist, dass die Auswertung der N einzelnen Zeilenbilder automatisch je nach Oberflächenregion unterschiedlich gewichtet wird, wobei das aus Produktionsdaten vorliegende Wissen über lokale Topologie und lokale optische Eigenschaften der Produktoberfläche genutzt wird und jeweils diejenige Bildzeile am lokal stärksten gewichtet wird, welches unter der im Sinne der Fehlererkennung am günstigsten liegenden Beleuchtungskonfiguration belichtet wurde.

## Claims

1. Process for inspecting the surfaces of moving products with at least one surface to be inspected (10), whereby the process comprises the following process stages:

   - at least one line camera (18) mounted at right angles to the movement of the surface (10) detects the surface to be inspected (10) as an image with a line scan, whereby the line scan is at least N times higher than the geometrical size of the defects (14) to be detected requires;
   - an illumination configuration, which in each case is different, from a number of N illumination configurations illuminates the surface to be inspected (10) stroboscopically, in synchronization with the line scan, whereby of N successive image lines of the line camera (18) each is illuminated with a different illumination configuration from the N illumination configurations, and whereby an illumination configuration is formed through selective activation or deactivation of individual or several light sources from a number of M light sources (20, 22, 24, 26);
   - a resulting, at least N-fold nested multisensorial image line (30, 32, 34, 36, 38, 40) of the surface to be inspected (10) is divided up into at least N individual image lines (A to E);
   - N individual line images are evaluated to detect defects (14) on the surface (10) using automatic image processing methods, whereby the evaluation of the N individual line images is automatically weighted differently depending on the surface region, whereby the knowledge about local topology and local optical properties of the product surface available from production data is used and the image line that was illuminated in the most favorable illumination configuration, in the sense of fault detection, was locally weighted most strongly.

2. Process in accordance with Claim 1, **characterized in that** the surface to be inspected (10) is locally structured in height and/or inclination and/or texture and/or color and/or brightness and/or another optically recognizable property.

3. Process in accordance with one of the above Claims, **characterized in that** the line camera (18) is a monochromatic line camera.

4. Process in accordance with one of the above Claims, **characterized in that** with the N illumination configurations, the surface to be inspected (10) is illuminated from different angles, with a different radiation characteristic, with spectrally different light and/or with different brightness.

5. Process in accordance with one of the above Claims, **characterized in that** the number M of the light sources (20, 22, 24, 26) is smaller than the number N of the illumination configurations.

6. Process in accordance with one of the above Claims, **characterized in that** the M light sources (20, 22, 24, 26) consist of semiconductor light sources.

7. Process in accordance with one of the above Claims, **characterized in that** the procedure is repeated after the recording of the at least N image lines.

8. Device for inspecting the surfaces of moving products with at least one surface to be inspected (10), whereby the device comprises the following:

   - at least one line camera (18) mounted at right angles to the movement of the surface (10) with a line scan which is at least N times higher than the geometrical size of the defects (14) to be detected requires;
   - a number of M light sources (20, 22, 24, 26)
   - a switching device which, synchronized with the line scan, switches an illumination configuration, which in each case is different, from N illumination configurations, each of which can illuminate the surface to be inspected (10) with a  different optical characteristic, through selective activation or deactivation of one or more of the M light sources (20, 22, 24, 26);
   - a device for dividing up the resulting, at least N-fold nested multisensorial image lines of the surface to be inspected (10) into at least N individual image lines;
   - a device for evaluating the N individual line images to detect defects on the surface (10) using automatic image processing methods.

## Revendications

1. Procédé d'inspection de surfaces de produits déplacés avec au moins une surface à contrôler (10), le procédé comprenant les étapes suivantes :

   - au moins une caméra linéaire (18) disposée en travers du déplacement de la surface (10) enregistre en images la surface à contrôler (10) avec une fréquence linéaire, la fréquence linéaire étant supérieure au moins N fois à ce qu'exige la taille géométrique des défauts à détecter (14) ;
   - une autre configuration d'éclairage parmi un certain nombre de N configurations d'éclairage éclaire la surface à contrôler (10) de manière stroboscopique, synchronisée avec la fréquence linéaire ; sur les N lignes de balayage successives de la caméra linéaire (18), chacune étant éclairée avec une autre configuration d'éclairage parmi les N configurations d'éclairage et une configuration d'éclairage étant formée par l'activation ou la désactivation sélective de différentes ou de plusieurs sources lumineuses parmi un certain nombre de M sources lumineuses (20, 22, 24, 26) ;
   - une ligne de balayage multisensorielle créée imbriquées au moins N fois (30, 32, 34, 36, 38, 40) de la surface à contrôler (10) est dissociée en au moins N lignes de balayage différentes (A bis E) ;
   - N lignes de balayage différentes sont exploitées pour la détection de défauts (14) sur la surface (10) avec le procédé de traitement d'image automatique, l'exploitation des N images linéaires différentes est pondérée différemment automatiquement selon la région de surface, les connaissances existantes issues des données de production sur la topologie locale et les caractéristiques optiques locales de la surface du produit sont utilisées et chaque ligne de balayage qui est pondérée le plus fortement localement a été éclairée selon la configuration d'éclairage la plus favorable au sens de la détection des défauts.

2. Procédé selon la revendication 1, dans lequel la surface à contrôler (10) est structurée localement dans la hauteur et/ou l'inclinaison et/ou la texture et/ou la couleur et/ou la luminosité et/ou une autre caractéristique détectable visuellement.

3. Procédé selon l'une des revendications précédentes, dans lequel la caméra linéaire (18) est une caméra linéaire monochromatique.

4. Procédé selon l'une des revendications précédentes, dans lequel avec les N configurations d'éclairage la surface à contrôler (10) est éclairée sous différents angles, avec une caractéristique d'émission différente, avec une lumière de spectre différent et/ou avec une luminosité différente.

5. Procédé selon l'une des revendications précédentes, dans lequel le nombre M de sources lumineuses (20, 22, 24, 26) est inférieur au nombre N de configurations d'éclairage.

6. Procédé selon l'une des revendications précédentes, dans lequel les M sources lumineuses (20, 22, 24, 26) sont composées de sources lumineuses semiconductrices.

7. Procédé selon l'une des revendications précédentes, dans lequel la procédure se répète après l'enregistrement des au moins N lignes de balayage.

**8.** Agencement destiné à l'inspection de surfaces de produits déplacés avec au moins une surface à contrôler (10), l'agencement comprenant ce qui suit :

- au moins une caméra linéaire (18) disposée en travers du déplacement de la surface (10) avec une fréquence linéaire qui est supérieure au moins N fois à ce qu'exige la taille géométrique des défauts à détecter (14) ;
- un nombre de M sources lumineuses (20, 22, 24, 26)
- un dispositif de commutation, qui commute de manière synchronisée avec la fréquence linéaire une autre configuration d'éclairage parmi les N configurations d'éclairage, qui peuvent éclairer la surface à contrôler (10) avec une caractéristique optique différente, par l'activation ou la désactivation sélective d'une ou de plusieurs des M sources lumineuses (20, 22, 24, 26) ;
- un dispositif destiné à dissocier les lignes de balayage multisensorielles créées entrelacées au moins N fois de la surface à contrôler (10) dans au moins N images linéaires différentes ;
- un dispositif d'évaluation des N images linéaires différentes pour la détection de défauts sur la surface (10) avec le procédé de traitement d'image automatique.

Fig. 1

Fig. 2

Fig. 3

Fig.4

**IN DER BESCHREIBUNG AUFGEFÜHRTE DOKUMENTE**

**In der Beschreibung aufgeführte Patentdokumente**

- EP 0898163 B1
- EP 0898163 A
- DE 10063293 A
- EP 1030173 A
- DE 19609045 C